Europäisches Patentamt

**European Patent Office**

**Office européen des brevets**

(19)

(11) Numéro de publication : **0 031 268 B1**

(12) **FASCICULE DE BREVET EUROPÉEN**

(45) Date de publication du fascicule du brevet :
25.07.84

(51) Int. Cl.³ : **C 08 F 14/26**, C 08 F 2/24

(21) Numéro de dépôt : **80401721.8**

(22) Date de dépôt : **02.12.80**

(54) **Procédé de polymérisation du tétrafluoréthylène en dispersion aqueuse.**

(30) Priorité : **21.12.79 FR 7931395**

(43) Date de publication de la demande :
**01.07.81 Bulletin 81/26**

(45) Mention de la délivrance du brevet :
**25.07.84 Bulletin 84/30**

(84) Etats contractants désignés :
**BE DE FR GB IT LU NL**

(56) Documents cités :
**FR-A- 1 566 920**
**GB-A- 1 545 675**

(73) Titulaire : **Société ATOCHEM**
**12-16, Allée des Vosges**
**F-92400 Courbevoie (FR)**

(72) Inventeur : **Herisson, Jean-Louis Georges**
**Les Hauts de Brignais No 5 Chemin de Bonneton**
**F-69530 Brignais (FR)**

(74) Mandataire : **Rochet, Michel et al**
**ATOCHEM Service PROPRIETE INDUSTRIELLE Tour**
**Manhattan Cedex 21**
**F-92091 Paris la Défense (FR)**

## Description

La présente invention concerne un procédé de polymérisation du tétrafluoréthylène de formule $C_2F_4$, ci-après dénommé TFE, en dispersion aqueuse ainsi que les produits fabriqués selon ce procédé. Ce procédé permet d'obtenir des dispersions à concentration en polytétrafluoréthylène ou PTFE élevées et stables mécaniquement dans le réacteur de polymérisation sans addition de stabilisant autre qu'un émulsifiant et en particulier sans addition de paraffine ou huiles de vaseline, de solvants fluorés, chlorés ou hydrogénés. Les produits résultant sont des poudres fines de PTFE de poids moléculaires plus élevés et par conséquent possédant de meilleures propriétés mécaniques, en particulier de traction-allongement.

La polymérisation du tétrafluoréthylène en émulsion aqueuse est une technique connue qui permet d'obtenir des dispersions de polytétrafluoréthylène dans l'eau, qui ont trouvé de nombreuses applications industrielles, en particulier le revêtement des métaux ou d'autres substrats, l'imprégnation des fibres et des tissus, la préparation de films et de vernis, la production par coagulation de poudres pour extrusion lubrifiée.

Dans les procédés actuellement connus, on prépare les dispersions de polytétrafluoréthylène à température constante en mettant en contact dans un autoclave résistant à la pression le monomère gazeux, ou un mélange de monomères dans le cas de la préparation de copolymères, avec une solution aqueuse maintenue à la température constante de polymérisation contenant un agent d'amorçage susceptible de former des radicaux libres à la température de polymérisation, éventuellement un tampon pour maintenir le milieu à un pH donné, et un émulsifiant qui est généralement un sel alcalin ou d'ammonium d'un acide carboxylique ou sulfonique dont la chaîne carbonée ne porte que des atomes de fluor et éventuellement de chlore. Dans ces conditions, les dispersions obtenues sont très peu stables et il n'est guère possible de dépasser une concentration en polytétrafluoréthylène de 25 à 30 % en poids.

Le fait de ne pas pouvoir dépasser des taux de conversion correspondant à 25 à 30 % en poids de concentration finale en PTFE a pour conséquence l'obtention de produits de poids moléculaires trop faibles. En effet, c'est surtout en fin de polymérisation, c'est-à-dire pour les taux de conversion élevés, que les molécules de plus haut poids moléculaire se forment. En conséquence, plus on atteint des concentrations finales élevées, tout étant égal par ailleurs, plus le poids moléculaire moyen de la poudre est élevé et meilleures sont ses propriétés en application.

Parmi les différentes possibilités d'augmentation du poids moléculaires à la polymérisation, il y a celles qui permettent cette amélioration sans augmentation du taux de conversion et celles qui en permettant l'augmentation du taux de conversion, amènent en même temps l'augmentation du poids moléculaire. Ces dernières possibilités sont les plus intéressantes car elles améliorent la productivité du matériel.

L'augmentation du poids moléculaire peut être réalisée par exemple en diminuant la quantité d'agents d'initiation utilisés mais ceci présente l'inconvénient de ralentir la polymérisation et par suite d'augmenter le temps pendant lequel la dispersion est soumise à l'agitation et donc d'obtenir des dispersions moins stables ou de concentrations en PFTFE encore inférieures ; on peut aussi par exemple augmenter la vitesse de la réaction, soit en augmentant la pression de monomère, mais on bute très vite sur des problèmes technologiques et de coût de matériel, soit en augmentant l'agitation mais là encore on risque de déstabiliser davantage la dispersion, soit en augmentant la quantité des agents d'initiation ce qui a pour effet d'annuler le gain apporté par l'augmentation de la vitesse de réaction.

L'augmentation des poids moléculaires peut être réalisée, sans changer les quantités des agents d'amorçage par amélioration de la conversion en PTFE, c'est-à-dire en augmentant la concentration finale des dispersions.

Une amélioration notable des résultats a été obtenue selon le brevet français 1 019 304, en ajoutant au milieu de polymérisation, à titre de stabilisant, de 0,1 à 12 % en poids de la dispersion aqueuse d'un hydrocarbure saturé contenant plus de 12 atomes de carbone et liquide dans les conditions de la polymérisation. Ce procédé présente plusieurs inconvénients : il rend le nettoyage de l'autoclave de polymérisation difficile, ce qui entraîne une perte de temps peu compatible avec une production industrielle, en particulier dans le cas d'utilisation d'un hydrocarbure paraffinique solide à la température ambiante. Par ailleurs, si l'hydrocarbure employé est liquide, son élimination totale de la dispersion nécessite des décantations assez longues qui conduisent en partique à la perte d'une quantité non négligeable de polytétrafluoréthylène. Enfin, si l'élimination de l'hydrocarbure n'est pas parfaite les traces résiduelles de ce produit fini. De plus les hydrocarbures saturés couramment employés sont souvent des mélanges plus ou moins purs qui peuvent être inconstants dans le temps et donc amener une irrégularité de la polymérisation et surtout qui ont une légère activité de transfert augmentant avec la température et empêchant d'obtenir des produits de haut poids moléculaire.

Une autre amélioration proposée par le brevet belge 678 637 consiste à utiliser comme stabilisant un hydrocarbure paraffinique halogéné ayant de 1 à 3 atomes de carbone, en particulier le trifluoro-1,1,2 trichloro-1,2,2 éthane. Cependant l'emploi de procédé est limité par l'obligation de travailler à des températures de polymérisation comprises entre 5 et 30 °C et par la nécessité d'utiliser des quantités importantes d'hydrocarbure chlorofluoré, de 50 à 500 g par litre de dispersion aqueuse, ce qui exige une

2

0 031 268

récupération du stabilisant par décantation de la dispersion et entraîne pratiquement une perte de stabilisant.

Une autre amélioration proposée par le brevet français 2 123 703 consiste à utiliser comme stabilisant des quantités extrêmement faibles d'hydrocarbures saturés halogénés acycliques ou cycliques comportant moins de 20 atomes de carbone et non copolymérisables avec le TFE ou des mélanges de ces produits ; on obtient des dispersions concentrées de PTFE présentant une très grande pureté et une excellente stabilité, mais il n'est pas possible d'obtenir des produits de poids moléculaire élevé, les additifs ayant une activité de transfert de chaîne importante.

Dans le brevet britannique 1 545 675 est proposée une polymérisation effectuée pour partie à une température maintenue constante et pour partie à une autre. Le but recherché est alors une augmentation de l'indice d'amorphisme pour le polymère formé dans la deuxième partie de la polymérisation. D'après le graphique joint à ce brevet, si la première partie de la polymérisation est effectuée à 70 °C ou plus, la deuxième partie doit être faite à plus haute température, mais si la première partie est faite à plus basse température, la deuxième partie doit être faite à température encore plus basse ; de plus cette polymérisation utilise de la cire de paraffine comme stabilisant et la concentration finale ne dépasse pas 25 % en poids.

Bien que le fait de ne pas polymériser à température constante soit considéré comme défavorable, en particulier pour des raisons de reproductibilité et de défaut d'obtention de concentration finale élevée, le procédé de préparation de dispersions aqueuses de PTFE selon l'invention consiste en une polymérisation à température croissante du TFE dissous dans un milieu aqueux contenant l'agent d'amorçage, l'émulsifiant approprié et un agent tampon et ne contenant aucun autre stabilisant et permettant cependant d'obtenir dans l'autoclave de polymérisation des dispersions de PTFE de concentration aussi élevées que 40-45 % en poids, stables mécaniquement. Ce type de polymérisation permet en outre d'obtenir un PTFE de poids moléculaire très élevé. Ce type de polymérisation présente également un intérêt économique car la non-utilisation d'additifs de stabilisation autres que l'émulsifiant permet des économies de matière et des économies de main-d'œuvre du fait d'un nettoyage plus facile des réacteurs.

Le procédé selon l'invention consiste en une polymérisation en dispersion aqueuse du TFE en présence d'un émulsifiant et d'un agent d'initiation, ce dernier donnant des radicaux libres entre sensiblement 0 et 45 °C et étant détruit à une température supérieure à 45 °C. Le procédé est caractérisé en ce qu'on fait suivre à la température du milieu réactionnel en fonction du temps de polymérisation, après éventuellement un palier initial de quelques minutes, palier n'excédant toutefois pas 15 minutes, une courbe ascendante, Température °C = f (temps en minutes), dont la pente $\Delta T/\Delta t$ ne peut être inférieure a 1/6, $\Delta T$ représentant la température en °C à un temps en minutes $\Delta T$ donné, cette courbe ascendante se situant à l'intérieur d'un secteur limité par deux droites $y = 7/12\,x$ et $y = 15/7\,x + 45$, y et x représentant respectivement la température en °C et le temps exprimé en minutes. Pour des raisons économiques ou technologiques, il est recommandé de limiter également le secteur par deux autres droites $y = 120$ et $x = 120$. En effet, il n'est pas économique de faire durer la polymérisation au-delà de 2 heures pour des concentrations de 40-45 % ; d'autre part, il est difficile pour un appareillage de dépasser une température de 120 °C quand on polymérise en milieu aqueux, et de plus il est difficile de dépasser des $\Delta T/\Delta t$ de 24/7 pour des raisons de dilatation thermique, chocs thermiques et évacuation des calories.

Il est remarqué que la courbe ascendante correspond, habituellement, sensiblement à une droite linéaire sur la majeure partie de la durée de la polymérisation. Sauf dans les cas éventuels où la polymérisation démarre pendant quelques minutes en palier, on peut estimer que la courbe ascendante est sensiblement une droite linéaire pour les 2/3 au moins de la durée de la polymérisation. En pratique, cette linéarité se constate dans les limites d'une part d'environ 30 g de PTFE formé par litre d'eau initial lorsque la polymérisation démarre sans palier et 200 g/l au plus pour un temps de palier maximum d'initiation de la polymérisation, et, d'autre part, d'au moins 500 g/l pour la fin de polymérisation. Lorsque la polymérisation est démarrée en palier, ce dernier n'excède pas en général 15 minutes.

On entend par droite sensiblement linéaire une précision pour la droite théorique, Température °C = f (temps en minutes), telle que pour tout point $T_i\,C°$ la valeur réelle du temps de polymérisation $t_i$ correspondant est exprimée à ± 10 minutes et telle que pour point $t_i$ la température réelle $T_i\,C°$ correspondante est exprimée à ± 5 °C.

Des données précédentes il ressort que la température initiale de polymérisation peut être comprise entre 0 et 45 °C, la température finale étant comprise entre 70 °C et 120 °C.

En dehors des conditions énoncées ci-dessus, les polymérisations en dispersion selon l'invention sont effectuées selon un procédé en lui-même connu.

La polymérisation est amorcée par des radicaux libres provenant de façon la plus habituelle de la décomposition d'un agent d'initiation tel qu'un peroxyde hydrosoluble comme le peroxyde de succinyle ou d'un persulfate alcalin ou d'ammonium permettant d'obtenir des radicaux libres entre 0 et 45 °C et de préférence 10 et 45 °C. L'agent d'initiation peut être utilisé en association avec un agent d'activation tel que sel ferreux, nitrate d'argent, bisulfite de sodium. Dans ce type de polymérisation selon l'invention, le passage au-dessus de la zone d'activité du système d'initiation, situé au maximum vers 45 °C, entraîne sa destruction ; la polymérisation se poursuit uniquement par les radicaux libres des chaînes en croissance. Habituellement, l'agent d'initiation est détruit avant que la concentration de la dispersion de PTFE formé ait atteint environ 20 %. Le pH peut être maintenu alcalin par un tampon, phosphate, pyrophosphate,

3

borate alcalin ou d'ammonium.

Les émulsifiants utilisés sont ceux connus dans ce genre de polymérisation, ce sont le plus souvent des sels fluorés ou chlorofluorés, en particulier des sels de sodium, d'ammonium, de lithium ou de potassium, d'acide perfluoromonocarboxylique ou perfluoromonosulfonique à 6 à 11 atomes de carbone, tel le perfluoroctanoate d'ammonium. Ils sont introduits en solution aqueuse, soit totalement au début de la polymérisation, soit progressivement au cours de la polymérisation, comme il est décrit dans le brevet français 1 550 055.

La pression de polymérisation est généralement comprise entre un et cent bars et de préférence entre 10 et 30 bars.

Afin d'expliciter les exemples présentés à titre illustratif de l'invention, les précisions préalables ci-après sont données.

La concentration des dispersions de PTFE est mesurée par extrait sec et est exprimée en % en poids de PTFE par rapport à la dispersion finale.

La stabilité mécanique des dispersions selon l'invention peut être déterminée en agitant, à la température ambiante, les dispersions préalablement diluées à 10 % de polytétrafluoréthylène, à l'aide d'un agitateur à quatre pales dans un récipient cylindrique muni de quatre contre-pales, analogue à l'appareil décrit par J. F. LONTZ dans Industrial and Engineering Chemistry, 1952, volume 44, page 1805.

La durée totale d'agitation à des vitesses bien déterminées nécessaires pour obtenir la coagulation permet d'évaluer la stabilité de la dispersion par rapport à l'échelle arbitraire suivante :

| Durée d'agitation | Stabilité |
|---|---|
| 0 à 5 mn à 250 tours/min | très faible |
| 5 à 15 mn à 250 tours/min | faible |
| 15 à 30 mn à 250 tours/min | moyenne |
| 30 mn à 250 tours/min + 0 à 30 mn à 350 tours/mn | élevée |
| pas de coagulation après 30 mn à 250 tours/min + 30 mn à 350 tours/min + 30 mn à 450 tours/min | exceptionnelle |

Le poids moléculaire du PTFE ne peut pas être déterminé directement puisque le PTFE n'est soluble dans aucun solvant. Seules des mesures indirectes permettent une évaluation comparative entre différentes poudres de PTFE. La méthode la plus connue est celle de la mesure de la Standard Specific Gravity (SSG) ; cette méthode ASTM 1 457-75 T nécessite de faire une plaquette de diamètre 76 mm et de la fritter selon un cycle thermique donné. Sur cette plaquette on peut également évaluer le poids moléculaire par l'allure de la courbe de traction-allongement réalisée sur des éprouvettes standard et plus précisément par exemple sur la valeur de la résistance à la traction pour un allongement donné, par exemple à 300 % d'allongement (RT 300 %).

La qualité de la poudre de PTFE obtenue par coagulation de la dispersion, séparation eau-poudre puis séchage, est contrôlée d'une part en faisant des mesures granulométriques et de masse volumique sur la poudre et d'autre part en procédant à des essais d'extrusion. Cette extrusion des poudres obtenues est faite dans les conditions détaillées ci-dessous ; la poudre est mélangée avec 18 % en poids soit d'essence E, soit de Kérosène. Après agitation pendant 30 minutes dans un flacon sur un mélangeur à rouleaux, le mélange est conditionné à 25 °C pendant au moins quatre heures. Le mélange lubrifié est ensuite versé dans un moule et est amené à l'état de préforme en augmentant la pression jusqu'à une valeur de 2,0 MN/m² en 5 minutes. La pression est alors maintenue à 2,0 MN/m² pendant encore 5 minutes. La préforme est ensuite extrudée à 30 °C en utilisant une extrudeuse hydraulique ayant une vitesse de piston constante de 8,0 cm/minute. Le polymère est extrudé à travers une filière, de 10,0 mm de diamètre comportant un poinçon central de 8,0 mm de diamètre. Le taux ou rapport de réduction, c'est-à-dire le rapport entre la surface de la section droite du cylindre renfermant le piston et la surface de la section droite de la filière, est approximativement de 90 : 1. La pression requise pour extruder le polymère dans ces conditions est mesurée au moyen d'un transducteur de pression. A la sortie de l'extrudeuse le tube (8 × 10) est séché en continu et fritté en continu à des températures d'environ 400 °C pendant des temps de quelques minutes. On peut également réaliser l'extrusion à travers une filière rectangulaire sans poinçon ; le jonc obtenu est calandré pour obtenir un ruban qui est ensuite séché, puis enroulé sur lui-même sous tension jusqu'à obtenir un rouleau d'une certaine épaisseur puis fritté quelques minutes à 380-400 °C. Parmi les critères d'évaluation de la quantité des poudres de PTFE, il y a l'aspect final des tubes (8 × 10) ou des rouleaux et en particulier la coloration ; des résidus d'huile de vaseline ou paraffine, même très faibles restant sur la poudre donnent une coloration plus ou moins brune au tube ou au rouleau.

## Exemple 1

Les essais de cet exemple sont donnés pour montrer l'effet d'une courbe de température croissante sur les poids moléculaires des PTFE obtenus et sur la stabilité mécanique de la dispersion. Ces polymérisations ont été volontairement arrêtées à des concentrations voisines pour que la comparaison ne soit pas faussée par ce paramètre. Les essais 2 et 3 sont dans le cadre de l'invention, l'essai 1 correspondant à une polymérisation faite selon l'art antérieur à température constante.

Dans un autoclave en acier inoxydable d'une capacité de 40 litres muni d'une double enveloppe de thermostatisation et d'un agitateur rotatif muni d'une turbine à 4 pales plates, tournant à 250 t/min, soigneusement dégazé, on introduit 20 litres d'eau, 11 g de perfluoroctanoate d'ammonium et 6,0 g de pyrophosphate de Na. La température du milieu étant à 15 °C, on introduit du tétrafluoréthylène gazeux jusqu'à atteindre une pression de 20 bars et 0,4 g de persulfate d'ammonium. L'agitation est mise en route et la pression de tétrafluoréthylène portée à 22 bars, et on ajoute 0,6 g de sel de Mohr. La polymérisation commence immédiatement ce qui entraîne une diminution de pression. Celle-ci est maintenue entre 20 et 22 bars par des introductions successives de monomère, tandis que l'on introduit progressivement 19 g de perfluoroctanoate d'ammonium. La température croît constamment. L'évolution de la température dans ces essais et les résultats obtenus sont donnés dans le tableau ci-après.

| | Température du milieu réactionnel °C | | | | | | Stabilité mécanique | | |
|---|---|---|---|---|---|---|---|---|---|
| N° de l'essai | Ini-tiale | Après 10 mn | Après 20 mn | Après 30 mn | En fin de polyméri-sation | Temps de polyméri-sation en minutes | de la dispersion finale en minutes | Concen-tration finale en PTFE (% pds) | RT 300 % MN/m² (kg/cm²) |
| 1 | Température constante de 17 °C ± 5 °C | | | | 21 | 50 | 15 | 29 | 14,5 (148) |
| 2 | 12 | 25 | 39 | 51 | 50 | 33 | 20 | 30 | 15,9 (162) |
| 3 | 14 | 30 | 47 | 63 | 65 | 33 | 29 | 27 | 16,2 (165) |

Ces essais permettent de constater qu'à concentration finale de la dispersion comparable, le fait de laisser la température du milieu réactionnel monter le plus vite possible permet d'améliorer la stabilité mécanique et le poids moléculaire de la poudre de PTFE.

Ces dispersions sont coagulées mécaniquement, puis la poudre est séparée de l'eau et séchée à 150 °C jusqu'à une teneur en humidité inférieure à 500 ppm. Elles sont ensuite mises en œuvre pour faire les tubes et les rouleaux selon le processus décrit plus haut. Les tubes et les rouleaux sont blancs et exempts de défauts.

Exemple 2

Dans un autoclave en acier inoxydable, du même type que celui de l'exemple 1, soigneusement dégazé, on introduit 20 litres d'eau, 11 g de perfluoroctanoate d'ammonium et 6 g de pyrophosphate de Na. La température du milieu étant à 15 °C, on introduit du tétrafluoréthylène gazeux jusqu'à atteindre une pression de 20 bars et 0,4 g de persulfate d'ammonium. L'agitation est mise en route et la pression de tétrafluoréthylène portée à 22 bars, puis on ajoute 0,6 g de sel de Mohr. La polymérisation commence immédiatement ce qui entraîne une diminution de pression. Celle-ci est maintenue entre 20 et 22 bars par des introductions successives de monomère, tandis que l'on introduit progressivement 69 g de perfluoroctanoate d'ammonium. La température croît constamment ; elle atteint 42 °C après 16 min pour une concentration de la dispersion d'environ 10 % en poids, 57 °C après 30 min pour une concentration d'environ 25 % en poids, 69 °C après 42 min, 78 °C après 52 min, 85 °C après 60 min et 88 °C après 68 min. A ce stade, la concentration est de 43 % en poids ; l'agitation est arrêtée, le monomère restant est dégazé et l'autoclave ouvert. Après vidange, l'autoclave est facilement nettoyé par un simple rinçage à l'eau.

Les particules dispersées sont de formes régulières et ont un diamètre de 0,2 à 0,3 μ. La stabilité de cette dispersion est élevée, mais il est cependant possible de la coaguler par agitation mécanique pour obtenir une poudre pour extrusion pâteuse.

Le poids spécifique du copolymère obtenu, déterminé selon la norme ASTM 1 457-75 T est de 2,150, ce qui dénote un poids moléculaire élevé. Le poids moléculaire peut être évalué d'après la courbe de traction-allongement, selon la norme ASTM 1 457-75 T. La valeur de la résistance à la traction pour un allongement donné de 300 % est de 20,6 MN/m² (210 kg/cm²).

Les produits finis sous forme de tubes ou de rouleaux sont blancs et exempts de défauts.

Exemple 3

On répète l'exemple 2 sauf que la température du milieu réactionnel au départ est de 32 °C ; elle atteint 40 °C après 10 min pour une concentration de la dispersion d'environ 10 % en poids, 60 °C après 30 min pour une concentration de 20 % en poids, 80 °C après 50 min, 90 °C après 64 min et 92 °C en fin de polymérisation. En fin de polymérisation, la concentration est de 40,1 % en poids. La polymérisation est arrêtée par arrêt de l'agitation et dégazage du monomère restant.

La stabilité de la dispersion obtenue est élevée. Le poids spécifique standard est de 2,15 et sur la courbe de traction-allongement la valeur de la RT 300 % est de 20,8 Mn/m² (212 kg/cm²) ; ces valeurs dénotent un produit de masse moléculaire élevée. Les produits finis sous forme de tubes ou de rouleaux sont blancs et exempts de défauts.

## Exemple 4

On répète l'exemple 2 en changeant de courbe de température. La température initiale est de 14 °C ; elle atteint 30 °C après 4 min, 50 °C après 13 min pour une concentration de la dispersion d'environ 18 % en poids, 80 °C après 25 min, 100 °C après 36 min, 110 °C après 45 min, 120 °C en fin de polymérisation après 48 min. La concentration finale est de 42,4 % en poids. On arrête l'agitation, le monomère restant est dégazé et l'autoclave ouvert. La dispersion finale a une stabilité mécanique élevée. Le poids spécifique standard est de 2,15 et la RT 300 % est de 21,6 MN/m² (220 kg/cm²) ce qui dénote un produit de masse moléculaire élevée.

Les produits finis sous forme de tubes ou de rouleaux sont blancs et exempts de défauts.

## Exemple 5

Cet exemple est donné à titre comparatif pour montrer l'effet néfaste d'un stabilisant du type paraffine ou huile hydrocarbonée saturée sur le poids moléculaire du PTFE et sur la qualité des produits finis fabriqués à partir de la poudre issue de la coagulation d'une dispersion polymérisée à température constante selon l'art antérieur.

On répète l'essai 1 de l'exemple 1 en introduisant dans le milieu réactionnel, au départ de la polymérisation, 1 litre d'huile de vaseline qualité CODEX, de la marque TOTAL TB-10.

La polymérisation doit être arrêtée au bout de 45 minutes, car la dispersion obtenue de stabilité moyenne commence à coaguler lorsque la concentration de la dispersion n'atteint que 32 % en polytétrafluoréthylène. La stabilité mécanique de la dispersion est faible (7 min). Le poids spécifique standard est de 2,18 et la RT 300 % est de 14,7 MN/cm²) 150 kg/cm²) ce qui dénote un produit de poids moléculaire nettement plus faible que celui des produits des essais 2, 3 et 4.

On laisse décanter la dispersion recueillie pendant 38 heures, puis on soutire le fond et on laisse la couche supérieure constituée essentiellement d'huile de vaseline et d'un peu de PTFE en partie sous forme de floculat et en partie sous forme de dispersion d'où une perte de produit. La partie soutirée est coagulée mécaniquement, la poudre est séparée de l'eau et séchée à 150 °C jusqu'à une teneur en humidité inférieure à 500 ppm. Les produits finis sous forme de tubes ou de rouleaux sont légèrement colorés en brun et surtout dans la masse.

## Exemple 6

Cet exemple est donné à titre comparatif. On répète l'essai 1 de l'exemple 1 aux exceptions près que l'on introduit en cours de polymérisation une quantité de 69 g de perfluoroctanoate d'ammonium et au départ 1 litre d'huile de vaseline qualité CODEX SIDEPALINE 2 X, et que l'on maintient la température du milieu réactionnel constante durant la polymérisation à 20 °C ± 5 °C. On arrête la polymérisation pour une concentration en PTFE de 37 % en poids. La dispersion obtenue a une stabilité mécanique moyenne (20 mn).

Le poids spécifique du polymère est de 2,17 et la RT 300 % est de 16,7 Mn/cm² (170 kg/cm²). Les produits finis sous forme de tubes ou de rouleaux sont colorés en brun.

## Exemple 7

On répète l'exemple 2, mais on ne met que 3 g de pyrophosphate de sodium, 0,2 g de persulfate d'ammonium et 0,3 g de sel de Mohr. La température initiale est de 14 °C ; elle atteint 40 °C après 18 min pour une concentration de la dispersion d'environ 12 % en poids, 60 °C après 36 min pour une concentration de 24 % en poids, 80 °C après 62 min et 84 °C en fin de polymérisation après 75 min. La concentration finale est de 40 % en poids. La stabilité mécanique est faible, mais suffisante pour les manipulations nécessaires. La RT 300 % est élevée, 22,6 MN/cm² (230 kg/cm²). Les produits finis sous forme de tubes ou de rouleaux sont blancs exempts de défauts et ont de bonnes caractéristiques mécaniques.

## Exemple 8

On répète l'exemple 2 mais on utilise l'émulsifiant $C_8F_{17}SO_3Li$ à la place du $C_7F_{15}COONH_4$, poids pour poids. La température initiale est de 13 °C ; elle atteint 40 °C après 24 min pour une concentration de la dispersion de 12 % en poids, 60 °C après 48 min pour une concentration d'environ 25 % en poids, 80 °C après 70 min et 90 °C en fin de polymérisation après 80 min. La concentration finale est de 40,5 % en poids. La stabilité mécanique de cette dispersion est exceptionnelle (30 min + 30 min + 30 min). La résistance à la traction à 300 % d'allongement (RT 300 %) est de 19,1 Mn/cm² (195 kg/cm²).

Exemples 9 et 10

Ces exemples sont donnés à titre comparatif pour montrer que si on polymérise à des températures initiales supérieures à 60 °C-70 °C, même avec un système catalytique actif à cette température, on n'a pas l'effet de stabilisation, selon l'invention, par élévation de la température. Pour l'exemple 9, on effectue la polymérisation dans un autoclave du même type que celui des essais précédents, on introduit 20 litres d'eau, 11 g de perfluoroctanoate d'ammonium. Après avoir amené la température du milieu à 70 °C, on introduit du TFE jusqu'à 22 bars ; on met en route l'agitation et on introduit alors 4 g de (NH₄)₂S₂O₈. La polymérisation démarre aussitôt et on maintient comme précédemment la pression de monomère entre 20 et 22 bars, tandis que l'on introduit 69 g de C₇F₁₅COONH₄. On maintient la température du milieu à 70 °C ± 5 °C. La polymérisation s'arrête pour une concentration de 30 %. La stabilité mécanique de la dispersion est faible. La RT 300 % est également faible, 17,7 Mn/m² (160 kg/cm²).

Pour l'exemple 10, on reprend exactement la polymérisation de l'exemple 9, mais on fait suivre à la température du milieu réactionnel une courbe ascendante : on a au départ 65 °C ; on atteint 70 °C après 14 min, 80 °C après 32 min, 90 °C après 78 min et 95 °C en fin de polymérisation après 91 min. On ne peut dépasser 32 % de concentration finale du latex. La stabilité mécanique est faible. La RT 300 % n'est que de 12,8 Mn/m² (130 kg/cm²). Cet exemple montre que si on fait suivre une courbe de température ascendante à une polymérisation amorcée à température élevée au lieu de le faire à une polymérisation amorcée par un système actif à température inférieure à 45 °C, le résultat obtenu est l'inverse de celui préconisé par l'invention, à savoir qu'on obtient pas la stabilisation de la dispersion permettant d'atteindre 40 % et plus de concentration et que le poids moléculaire est plus faible au lieu d'être plus fort.

Exemple 11

On répète l'exemple 2, mais on maintient la température du milieu réactionnel constante à 20 °C ± 5 °C pendant 12 min soit une concentration de la dispersion d'environ 18 % pds en PTFE puis on suit une courbe ascendante de température ; on est à 50 °C après 30 min, à 70 °C après 47 min et à 78 °C en fin de polymérisation après 57 min. La concentration finale est de 40 % ; la stabilité mécanique du latex est levée ; la RT 300 % est de 21,1 MN/cm² (215 kg/cm²). Les produits finis sous forme de tubes et rouleaux sont blancs exempts de défauts et ont de bonnes caractéristiques mécaniques.

**Revendications**

1. Procédé de polymérisation en dispersion aqueuse du tétrafluoréthylène en présence d'un émulsifiant et d'un agent d'initiation, ce dernier donnant des radicaux libres entre 0 et 45 °C et étant détruit à une température supérieure à 45 °C, caractérisé en ce qu'on fait suivre à la température du milieu réactionnel en fonction du temps de polymérisation une courbe ascendante, Température °C = f (temps en minutes), dont la pente $\Delta T/\Delta t$ ne peut être inférieure à 1/6, $\Delta T$ représentant la température en °C à un temps en minutes $\Delta t$ donné, cette courbe ascendante se situant à l'intérieur d'un secteur limité par deux droites y = 7/12 x et y = 15/7 x + 45, y et x représentant respectivement la température en °C et le temps exprimé en minutes, et en ce que l'agent d'initiation est détruit avant que la concentration de la dispersion de polytétrafluoréthylène formé ait atteint 20 %.

2. Procédé selon la revendication 1 caractérisé en ce que la courbe ascendante, Température °C = f (temps en minutes), est assimilée à une droite linéaire pour la majeure partie de la polymérisation.

3. Procédé selon l'une des revendications 1 à 2 caractérisé en ce que la courbe ascendante ne démarre qu'après un palier d'initiation de la polymérisation n'excédant pas 15 minutes.

4. Procédé selon la revendication 3 caractérisé en ce que la courbe ascendante est assimilée à une droite linéaire dans l'intervalle de polymérisation où se forme de 200 g au plus de polytétrafluoréthylène par litre d'eau initial et 500 g au moins de polytétrafluoréthylène par litre d'eau initial et 500 g au moins de polytétrafluoréthylène par litre d'eau initial en fin de polymérisation.

5. Procédé selon l'une des revendications 1 à 2 caractérisé en ce que la polymérisation démarre immédiatement selon la courbe ascendante, Température °C = f (temps en minutes), cette dernière étant assimilée à une étroite linéaire pour les 2/3 au moins de la durée de la polymérisation.

6. Procédé selon la revendication 5 caractérise en ce que la courbe ascendante est assimilée à une droite linéaire dans l'intervalle de polymérisation où se forme de 30 à 500 g au moins de polytétrafluoréthylène par litre d'eau initial.

7. Procédé selon l'une des revendications 2 à 6 caractérisé en ce que la précision de la linéarité de la droite théorique, Température °C = f (temps en minutes) est telle que pour tout point $T_iC°$ la valeur réelle du temps de polymérisation $t_i$ correspondant est exprimée à ± 10 minutes et telle que pour tout point $t_i$ la température réelle $T_iC°$ correspondante est exprimée à ± 5 °C.

8. Procédé selon l'une des revendications 1 à 7 caractérisé en ce que la température initiale de polymérisation est comprise entre 0 et 45 °C et la température finale entre 70 et 120 °C.

**Claims**

1. Process for the polymerisation of tetrafluoroethylene in aqueous dispersion in the presence of an emulsifier and an initiator, the latter giving free radicals at between 0 and 45 °C and being destroyed at a temperature above 45 °C, characterised in that the temperature of the reaction mixture as a function of the polymerisation time, temperature °C = f (time in minutes), is caused to follow a rising curve, whose slope $\Delta T/\Delta T$ cannot be less than 1/6, $\Delta T$ representing the temperature in °C at a given time in minutes $\Delta t$, this rising curve being located within a sector defined by two straight lines $y = 7/12\,x$ and $y = 15/7\,x + 45$, y and x respectively representing the temperature in °C and the time expressed in minutes, and in that the initiator is destroyed before the concentration of the polytetrafluoroethylene dispersion formed has reached 20 %.

2. Process according to Claim 1, characterised in that the rising curve, temperature °C = f (time in minutes), approximates to a straight line for the greater part of the polymerisation.

3. Process according to one of Claims 1 and 2, characterised in that the rising curve only starts after a level portion, corresponding to polymerisation initiation, not exceeding 15 minutes.

4. Process according to Claim 3, characterised in that the rising curve approximates to a straight line over the polymerisation interval in which there is formed at most 200 g of polytetrafluoroethylene per litre of initial water and at least 500 g of polytetrafluoroethylene per litre of initial water at the end of the polymerisation.

5. Process according to one of Claims 1 and 2, characterised in that the polymerisation starts immediately along the rising curve, temperature °C = f (time in minutes), this curve approximating to a straight line for at least 2/3 of the duration of the polymerisation.

6. Process according to Claim 5, characterised in thath the rising curve approximates to a straight line over the polymerisation interval in which there is formed from 30 to at least 500 g of polytetrafluoroethylene per litre of initial water.

7. Process according to one of Claims 2 to 6, characterised in that the precision of linearity of the theoretical straight line, temperature °C = f (time in minutes), is such that at any point $T_iC°$ the actual value of the corresponding polymerisation time $t_i$ is expressed to within $\pm 10$ minutes and such that for any point $t_i$ the corresponding actual temperature $T_iC°$ is expressed to within $\pm 5$ °C.

8. Process according to one of Claims 1 to 7, characterised in that the initial polymerisation temperature is between 0 and 45 °C and the final temperature between 70 and 120 °C.

**Ansprüche**

1. Verfahren zur Polymerisation von Tetrafluoräthylen in wässriger Dispersion in Gegenwart eines Emulgators und eines Initiators, der bei einer Temperatur zwischen 0 und 45 °C freie Radikale bildet und bei einer Temperatur oberhalb von 45 °C zerstört wird, dadurch gekennzeichnet, daß man die Temperatur des Reaktionsgemisches in Abhängigkeit von der Polymerisationszeit einer aufsteigenden Kurve, Temperatur °C = f (Zeit in Minuten), folgen läßt, deren Gefälle $\Delta T/\Delta t$ nicht unterhalb von 1/6 liegen kann, wobei $\Delta T$ die Temperatur in °C zu einer in Minuten vorgegebenen Zeit $\Delta t$ darstellt, und diese aufsteigende Kurve innerhalb eines Bereiches liegt, der durch zwei Gerade $y = 7/12\,x$ und $y = 15/7\,x + 45$ begrenzt ist, wobei y und x die Temperatur in °C bzw. die in Minuten ausgedrückte Zeit bedeuten, und daß der Initiator zerstört wird, bevor die Konzentration der gebildeten Polytetrafluoräthylen-Dispersion 20 % erreicht hat.

2. Verfahren nach Anspruch 1, dadurch gekennzeichnet, daß die aufsteigende Kurve, Temperatur °C = f (Zeit in Minuten), während des größten Teils der Polymerisation einer linearen Geraden angeglichen ist.

3. Verfahren nach Anspruch 1 oder 2, dadurch gekennzeichnet, daß die aufsteigende Kurve erst nach einer Stufe der Initiierung der Polymerisation beginnt, die nicht mehr als 15 Minuten dauert.

4. Verfahren nach Anspruch 3, dadurch gekennzeichnet, daß die aufsteigende Kurve in dem Intervall der Polymerisation, in dem sich höchstens 200 g Polytetrafluoräthylen pro Liter Ausgangswasser und am Ende der Polymerisation mindestens 500 g Polytetrafluoräthylen pro Liter Ausgangswasser bilden, einer linearen Geraden angeglichen ist.

5. Verfahren nach Anspruch 1 oder 2, dadurch gekennzeichnet, daß die Polymerisation unmittelbar nach der aufsteigenden Kurve, Temperatur °C = f (Zeit in Minuten), beginnt, wobei letztere während mindestens 2/3 der Polymerisationszeit einer linearen Geraden angeglichen ist.

6. Verfahren nach Anspruch 5, dadurch gekennzeichnet, daß die aufsteigende Kurve innerhalb der Polymerisationszeit, in der sich von 30 bis mindestens 500 g Polytetrafluoräthylen pro Liter Ausgangswasser bilden, einer linearen Geraden angeglichen ist.

7. Verfahren nach einem der Ansprüche 2 bis 6, dadurch gekennzeichnet, daß die Genauigkeit der

**0 031 268**

Linearität der theoretischen Geraden, Temperatur °C = f (Zeit in Minuten) derart ist, daß für jeden Punkt $T_iC°$ der tatsächliche Wert der entsprechenden Polymerisationszeit $t_i$ in $\pm$ 10 Minuten ausgedrückt wird, und daß für jeden Punkt $t_i$ die entsprechende reelle Temperatur $T_iC°$ in $\pm$ 5 °C ausgedrückt wird.

8. Verfahren nach einem der Ansprüche 1 bis 7, dadurch gekennzeichnet, daß die Ausgangstemperatur der Polymerisation zwischen 0 und 45 °C und die Endtemperatur zwischen 70 und 120 °C liegt.